Europäisches Patentamt

European Patent Office

Office européen des brevets

(11) Veröffentlichungsnummer: **0 278 995**
**A1**

## (12) EUROPÄISCHE PATENTANMELDUNG

(21) Anmeldenummer: **87102185.3**

(22) Anmeldetag: **17.02.87**

(51) Int. Cl.⁴: **F16B 21/08**

(43) Veröffentlichungstag der Anmeldung:
**24.08.88 Patentblatt 88/34**

(84) Benannte Vertragsstaaten:
**ES FR GB IT NL SE**

(71) Anmelder: **SPRINGFIX BEFESTIGUNGSTECHNIK GMBH**
**Brühlstrasse 38**
**D-7335 Salach(DE)**

(72) Erfinder: **Benik, Wernfried**
**Grünenbergstrasse 34**
**D-7336 Uhingen(DE)**

(74) Vertreter: **Bardehle, Heinz, Dipl.-Ing. et al**
**Patent- und Rechtsanwälte**
**Bardehle-Pagenberg-Dost-Altenburg &**
**Partner Galileiplatz 1 Postfach 86 06 20**
**D-8000 München 86(DE)**

(54) **Steckbolzen und Vorrichtung zu seiner Montage.**

(57) Steckbolzen (1) zum Einführen in eine oder mehrere Bauteilbohrungen mit einem weitgehend zylindrischen Bolzenteil (2), wobei das zylindrische Bolzenteil eine gerollte Hülse ist und an seiner einen Seite eine nach außen weisende Abkantung (4, 5) und an seiner anderen Seite eine über den äußeren Umfang des zylindrischen Bolzenteils hinausragende, einstückig mit dem zylindrischen Bolzenteil verbundene Federzunge (7, 8) aufweist.

Fig. 1

EP 0 278 995 A1

## Steckbolzen und Vorrichtung zu seiner Montage

Die vorliegende Erfindung bezieht sich auf Steckbolzen zum Einführen in die Bohrung eines oder mehrerer Bauteile mit einem weitgehend zylindrischen Bolzenteil.

Steckbolzen der vorstehend genannten Art werden häufig verwendet, um z.B. Bauteile gelenkig miteinander zu verbinden oder um z.B. zwei konzentrisch ineinander geschobene Bauteile in einer bestimmten Stellung zu fixieren. Bekannte Steckbolzen dieser Art werden massiv durch Drehen oder Schmieden hergestellt und weisen an einer Seite eine umlaufende Nut zur Aufnahme eines Sicherungsringes auf. Die Herstellung und die Montage dieser bekannten Bolzen ist sehr aufwendig und erfordert häufig einen im Verhältnis zur gewünschten Festigkeit übertriebenen Materialeinsatz.

Die vorliegende Erfindung stellt sich die Aufgabe, die Herstellung und die Montage derartiger Steckbolzen bei gleichzeitiger Verringerung des Materialaufwandes zu vereinfachen.

Diese Aufgabe wird bei einem Steckbolzen der eingangs genannten Art erfindungsgemäß durch den kennzeichnenden Teil des Anspruchs 1 gelöst.

Der erfindungsgemäße Steckbolzen bietet den Vorteil, daß er mit einem verhältnismäßig einfachen Fertigungsverfahren und dennoch mit großer Genauigkeit hergestellt werden kann. Der Materialeinsatz und das Gewicht ist gegenüber einem massiven Bolzen erheblich vermindert. Durch die einstückig mit dem zylindrischen Bolzenteil verbundenen Federzungen entfällt die Erfordernis eines zusätzlichen Sicherungselementes, um den Bolzen von dem Herausfallen aus der Bohrung zu sichern. Des weiteren wird die Montage durch den erfindungsgemäßen Sicherungsbolzen erheblich vereinfacht, da es genügt, den Sicherungsbolzen in die entsprechende Bohrung einzudrücken, wobei die Federzungen zunächst in Richtung auf die Achse des zylindrischen Bolzenteils hin verformt werden und nach dem Austritt aus der Bauteilbohrung wieder ihre ursprüngliche Form annehmen.

Gemäß einer zu bevorzugenden Ausführungsform wird der erfindungsgemäße Steckbolzen aus Federbandstahl gefertigt und anschließend gehärtet, so daß auch höhere Festigkeitsanforderungen zufriedenstellend erfüllt werden können.

Je nach den gewünschten Anforderungen und konstruktiven Gegebenheiten können zwei oder mehr Federzungen um den Umfang des Steckbolzens verteilt werden.

Gemäß einer zu bevorzugenden Ausführungsform sind die Federzungen aus dem Zylindermantel des zylindrischen Bolzenteils ausgestanzt und nach außen gebogen. Gemäß einer weiteren zu bevorzugenden Ausführungsform ist nur eine Federzunge vorgesehen, die sich von der einen Seite des Zylindermantels mittels eines Radius durch eine Ausnehmung auf der anderen Seite des Zylindermantels hindurch erstreckt. Diese Ausführungsform bietet den Vorteil, daß die Feder zunge einen verhältnismäßig großen Federweg aufweist und deshalb ohne Montageschwierigkeiten weit über den Außenumfang des zylindrischen Bolzenteils hinausragen kann. Des weiteren kann die Steifigkeit, d.h. die Vorspannung, mit der die Federzunge auf das Bauteil drückt, durch die Wahl eines entsprechenden Radius beeinflußt werden. Ein großer Radius bedeutet dabei eine verhältnismäßig geringe Vorspannung und damit einen großen möglichen Federweg des Bolzens; ein kleiner Radius hat eine große Vorspannung und einen kleinen Federweg zur Folge.

Gemäß einer weiteren zu bevorzugenden Ausführungsform werden die Federzungen aus dem Zylindermantel ausgestanzt, nach außen gebogen und an ihrem vorderen, dem Bauteil zugewandten Teil so abgekantet, daß der vordere Teil der Federzunge senkrecht zur Zylinderachse des zylindrischen Bolzenteiles liegt und auf diese Zylinderachse hinweist. Diese Ausführungsform hat zum einen den Vorteil, daß die Federzunge über eine größere Fläche an dem Bauteil anliegt, zum anderen bietet sie die Möglichkeit einer besonders zuverlässigen Montage mit Hilfe einer speziellen Vorrichtung, die nachfolgend erläutert wird.

Wird der erfindungsgemäße Steckbolzen bei Bauteilen verwendet, für die erhöhte Sicherheitsanforderungen gelten, wie z.B. bei der Bremsanlage eines Kraftfahrzeuges, so muß gewährleistet werden, daß der Bolzen so weit in die Bauteilbohrungen eingeschoben wird, daß die Federzungen auch tatsächlich hinter dem Bauteil einrasten. Bei einer unsachgemäßen manuellen oder durch einen programmgesteuerten Handhabungsautomaten erfolgenden Montage kann es passieren, daß der Steckbolzen nicht weit genug eingeschoben wird, was insbesondere dann nicht bemerkt wird, wenn die Montagestelle nur von einer Seite aus zugänglich und einsehbar ist. Die Erfindung schlägt deshalb die Verwendung einer Montagevorrichtung mit einem an den Innendurchmesser des Steckbolzens angepaßten Schaft vor, welche eine umlaufende Nut aufweist, in die die Abkantungen der Federzungen während des Einführens in die Bauteilbohrung eingreifen. Die Montagevorrichtung funktioniert folgendermaßen: Der Steckbolzen gemäß der vorstehend beschriebenen Ausführungsform wird auf den Montageschaft aufgesetzt und gemeinsam mit dem Schaft in die Bauteilbohrung eingeschoben. Dabei greifen die Abkantungen der Federzunge in die Nut des Montageschafts ein und halten dadurch den Schaft fest. Sobald der Bolzen seine Endlage erreicht hat, federn die Federzungen nach außen und geben die Montagevorrichtung frei, die dann ohne Schwierigkeit wieder herausgezogen werden kann. Hat der Bolzen bei der Montage die gewünschte Endlage nicht erreicht, können die Federzungen nicht nach außen federn. Dies bedeutet, daß die Abkantungen im Eingriff mit der Nut bleiben und das Montagewerkzeug nicht zurückgezogen werden kann. Die Bedienungskraft wird dadurch auf die Fehlmontage aufmerksam. Bei einer automatischen Montage kann das Programm des Handhabungsautomaten so gestaltet werden, daß über einen Kraftbegrenzer der Handhabungsautomat abgeschaltet und ein Fehler gemeldet wird, wenn das Montagewerkzeug nicht mehr aus der Bauteilbohrung herausgezogen werden kann. Durch diese Vorrichtung ist es somit möglich zu verhindern, daß die Federzungen nur unvollständig nach außen zurückfedern.

Wenn der Montagevorgang so ungenügend war, daß der Steckbolzen mit dem Montagewerkzeug wieder herausgezogen werden kann, wird keine Verbindung zwischen den Bauteilen hergestellt, was durch eine einfache Sicht-oder sonstige Fehlerkontrolle leicht bemerkt wird.

Falls der Steckbolzen für die manuelle Montage so dimensioniert ist, daß er auch mit der Hand, d.h. ohne Verwendung des Montagewerkzeuges montiert werden könnte, kann man gemäß einer zu bevorzugenden Ausführungsform an der der Federzunge abgewandten Seite des Steckbolzens, spitze Erhebungen vorsehen, die eine Montage mit der Hand unmöglich machen.

Die Montagevorrichtung weist eine Anlagefläche auf, an der der Bolzen während der Montage anliegt und die auch im Hinblick auf eventuelle Erhebungen an dieser Seite des Bolzens gestaltet werden kann und ist mit einem geeigneten Handgriff versehen. Zur Verbindung mit einem Handhabungsautomaten können die dem Fachmann bekannten Vorrichtungen verwendet werden.

Weitere vorteilhafte Ausgestaltungen sind Gegenstand der Unteransprüche.

Weitere Vorteile, Merkmale und Anwendungsmöglichkeiten der vorliegenden Erfindung ergeben sich durch die nachfolgende Beschreibung von Ausführungsbeispielen im Zusammenhang mit den Figuren. Darin zeigen:

Fig. 1 einen Längsschnitt eines Ausführungsbeispiels des erfindungsgemäßen Steckbolzens entlang der Linie I-I in Fig. 2;

Fig. 2 eine Draufsicht auf das Ausführungsbeispiel gemäß Fig. 1;

Fig. 3 ein weiteres Ausführungsbeispiel des erfindungsgemäßen Steckbolzens im Längsschnitt;

Fig. 4 ein weiteres Ausführungsbeispiel des erfindungsgemäßen Steckbolzens im Längsschnitt;

Fig. 5 eine Montagevorrichtung zur Montage von Steckbolzen gemäß der Ausführungsform von Fig. 4.

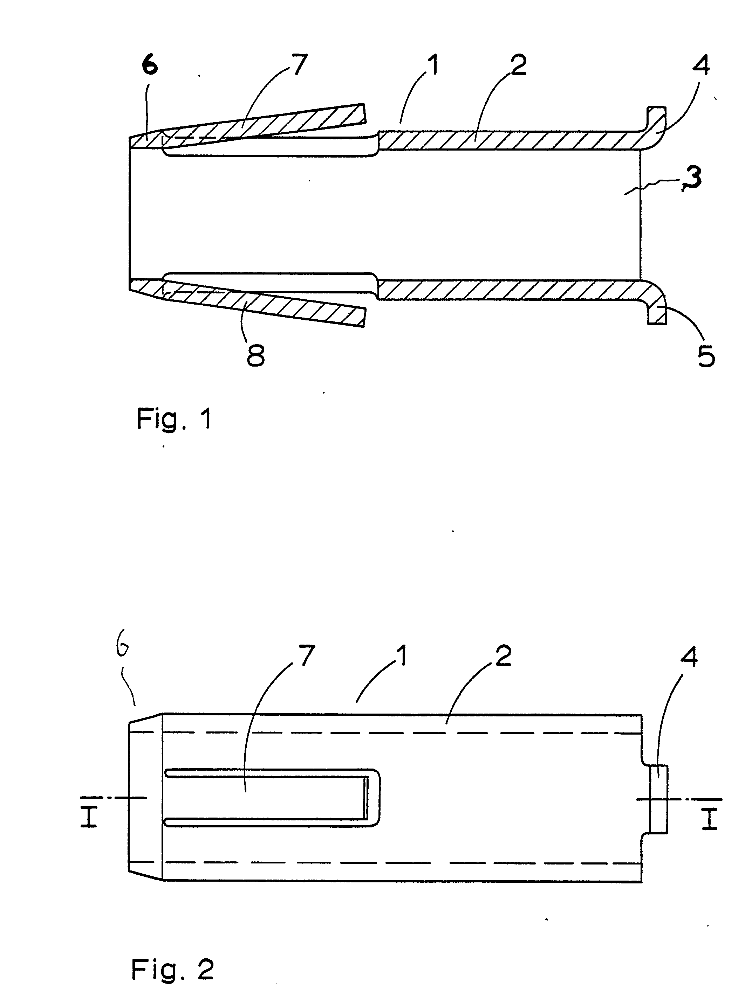

Die Fig. 1 und 2 zeigen ein erstes Ausführungsbeispiel des erfindungsgemäßen Steckbolzens. Der Steckbolzen besteht aus dem zylindrischen Bolzenteil 1, welches den Zylindermantel 2 und die Innenöffnung 3 aufweist. An der einen Seite des Steckbolzens befinden sich die Abkantungen 4 und 5. Die entgegengesetzte Seite des Bolzens weist eine Abfasung 6 auf, die das Einführen des Steckbolzens in die Bauteilbohrung erleichtert. Die Federzungen 7 und 8 sind aus dem Zylindermantel ausgestanzt und nach außen gebogen. Der Bolzen ist aus Federbandstahl gefertigt und gehärtet.

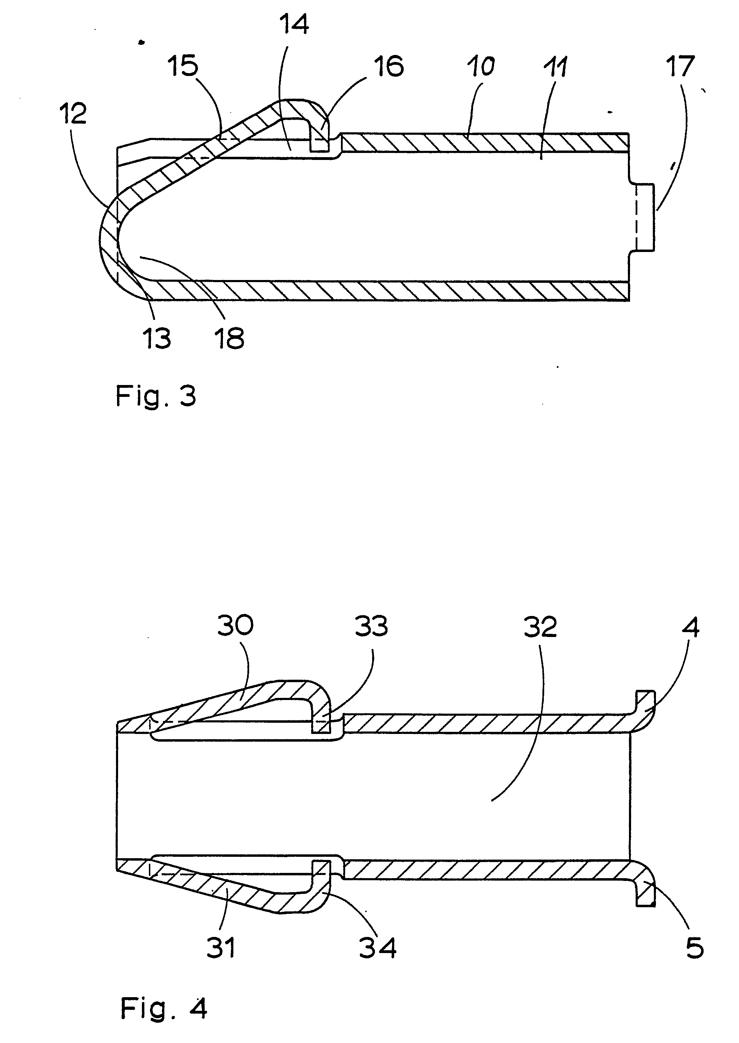

Ein weiteres Ausführungsbeispiel wird in Fig. 3 gezeigt. Der Steckbolzen weist ein zylindrisches Bauteil 10 mit einem Zylindermantel 11 und einer damit einstückig verbundenen Federzunge 12 auf. Die Federzunge ist im vorderen Bereich des Bolzens um einen Radius 13 gebogen und durchdringt die gegenüberliegende Seite des Zylindermantels durch die Ausnehmung 14. Die Federzunge weist nach dem Radius einen geraden Abschnitt 15 auf und ist an der Vorderseite durch die Abkantung 16 in Richtung auf die Zylinderachse 17 hin abgekantet. Diese Abkantung hat den Vorteil, daß sich eine größere Auflagefläche gegenüber dem Bauteil ergibt. Die Steifigkeit dieser Federzunge kann durch entsprechende Wahl des Radius 13 und durch den Winkel 18, den der gerade Teil der Federzunge 15 mit der Zylinderachse 17 einschließt variiert werden. Ein großer Radius bedeutet dabei eine geringere Steifigkeit der Feder, eine geringere Vorspannung bei der Anlage auf dem Bauteil und einen größeren Verschiebeweg, wenn der Bolzen in dem Bauteil bewegt wird. Ein kleinerer Radius und ein kleinerer Winkel 18 erhöht die Steifigkeit, die Vorspannung auf das Bauteil und vermindert den Verschiebeweg des Bolzens. Der Bolzen kann somit in sehr vorteilhafter Weise an unterschiedliche Einsatzbedingungen angepaßt werden.

Ein weiteres Ausführungsbeispiel zeigt die Fig. 4. Der Aufbau entspricht im wesentlichen dem Ausführungsbeispiel gemäß den Fig. 1 und 2, gegenüber diesen ist aber der vordere Teil der Federzungen 30 und 31 in Richtung auf die Zylinderachse 32 des Steckbolzens hin abgekantet. Die Abkantungen 33 und 34 verringern den Innendurchmeser des Bolzens an dieser Stelle, wenn der Bolzen in die Bauteilbohrung geschoben wird, und die Federzungen 30 und 31 in Richtung auf die Zylinderachse hin gedrückt werden. Als weiterer Vorteil ergibt sich bei diesem Ausführungsbeispiel, daß die Federzunge mit einer größeren Auflagefläche an dem Bauteil anliegt.

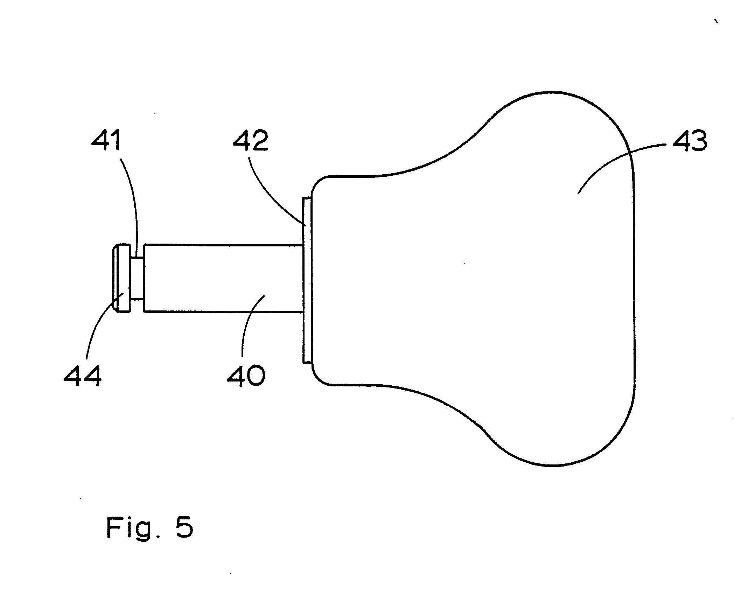

Fig. 5 zeigt eine Montagevorrichtung zur Montage eines Steckbolzens gemäß der in Fig. 4 gezeigten Ausführungsform. Die Montagevorrichtung besteht aus einem zylindrischen Schaft 40, dessen Außendurchmesser dem Innendurchmesser des Steckbolzens entspricht. An dem vorderen Teil ist eine Nut 41 eingestochen, in die die Abkantungen 33 und 34 bei der Montage eingreifen. Die Montagevorrichtung weist des weiteren eine Anlagefläche 42 auf, an der die Abkantungen 34 und 35 des Steckbolzens anliegen. Die Anlagefläche 42 kann der Form des Bolzens angepaßt werden, z.B. können Vertiefungen vorgesehen werden, wenn der Steckbolzen an der Montageseite mit entsprechenden Erhebungen versehen ist. Im übrigen kann die Anlagefläche 42 auch direkt durch den Handgriff 43 gebildet werden. Der vordere Teil des Schaftes 44 ist wiederum angefast, um das Einführen der Montagevorrichtung in die Bauteilbohrung zu erleichtern.

**Ansprüche**

1. Steckbolzen zum Einführen in eine oder mehrere Bauteilbohrungen mit einem weitgehend zylindrischen Bolzenteil, **dadurch gekennzeichnet,** daß das zylindrische Bolzenteil (1) eine gerollte Hülse ist und an seiner einen Seite eine nach außen weisende Abkantung (4,5) und an seiner anderen Seite eine über den äußeren Umfang des zylindrischen Bolzenteils hinausragende, einstückig mit dem zylindrischen Bolzenteil verbundene Federzunge (7,8; 12; 30,31) aufweist.

2. Steckbolzen gemäß Anspruch 1, dadurch gekennzeichnet, daß die Federzungen (7,8; 30,31) aus dem Zylindermantel (2) des zylindrischen Bolzenteils (1) ausgestanzt sind und daß zwei oder mehr Federzungen über den Umfang des zylindrischen Bolzenteils (1) verteilt sind.

3. Steckbolzen gemäß Anspruch 1, dadurch gekennzeichnet, daß die Federzunge (12) mit einer Seite des Zylindermantels verbunden ist, daß an der radial gegenüberliegenden Seite des Zylindermantels eine Ausnehmung 14 angeordnet ist und daß die Federzunge (12) mittels eines Radius (13) derart gebogen ist, daß sie die Ausnehmung 14 durchdringt und über den Außenumfang des Zylinders übersteht.

4. Steckbolzen gemäß Anspruch 2, dadurch gekennzeichnet, daß die Federzungen (30,31) an ihrem vorderen, dem Bauteil zugewandten Ende eine auf die Zylinderachse des zylindrischen Bolzenteils (32) hin gerichtete Abkantung (33,34) aufweisen.

5. Vorrichtung zur Montage eines Steckbolzens gemäß Fig. 4, dadurch gekennzeichnet, daß das Montagewerkzeug einen an den Innendurchmesser des Steckbolzens angepaßten Schaft (40) aufweist, an dessen hinterem Ende eine Anlagefläche (42) vorgesehen ist und welcher in seinem vorderen Bereich eine Nut (41) aufweist, in welche die Abkantungen (33,34) des Steckbolzens bei der Montage eingreifen können.

6. Steckbolzen gemäß einem der Ansprüche 1 bis 4, dadurch gekennzeichnet, daß der Bolzen aus Federbandstahl gefertigt und gehärtet ist.

0 278 995

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 216 880 (ERNST) <br> * Seite 5, Zeile 5, Figur 5 * <br><br> --- | 1,2 | F 16 B 21/08 |
| A | FR-A- 879 636 (TINNERMAN PRODUCTS) <br> * Figur 14 * <br><br> --- | 1,2 | |
| A | GB-A- 688 518 (UNITED-CARR FASTENER CORP.) <br> * Seite 1, Zeilen 78-80, Figur 3 * <br><br> --- | 1,2 | |
| A | US-A-2 271 488 (NOLD) <br> * Figur 8 * <br><br> --- | 1,2 | |
| A | US-A-2 391 298 (DAVIS) <br> * Figuren 1, 4 * <br><br> --- | 1,2 | RECHERCHIERTE SACHGEBIETE (Int. Cl.4) |
| A | US-A-2 408 340 (POUPITCH) <br> * Figur 5, Spalte 1, Zeile 22 * <br><br> --- | 1,2 | F 16 B 21/00 |
| A | US-A-3 455 201 (RYDER) <br> * Figuren 5, 9 * <br><br> --- | 1,2 | |
| A | GB-A-2 094 387 (YORK FORGE AND WELDING) <br> * Figur 2 * <br><br> ----- | 3,4 | |

Der vorliegende Recherchenbericht wurde für alle Patentansprüche erstellt.

| Recherchenort | Abschlußdatum der Recherche | Prüfer |
|---|---|---|
| BERLIN | 13-08-1987 | ZAPP E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82